(19) Europäisches Patentamt
European Patent Office
Office européen des brevets

(11) **EP 4 307 203 A1**

(12) **EUROPEAN PATENT APPLICATION**
published in accordance with Art. 153(4) EPC

(43) Date of publication:
**17.01.2024 Bulletin 2024/03**

(21) Application number: **22767428.0**

(22) Date of filing: **07.03.2022**

(51) International Patent Classification (IPC):
***G06Q 40/06*** (2012.01)   ***A63F 13/335*** (2014.01)
***A63F 13/792*** (2014.01)

(52) Cooperative Patent Classification (CPC):
**A63F 13/335; A63F 13/792; G06Q 40/06**

(86) International application number:
**PCT/KR2022/003138**

(87) International publication number:
**WO 2022/191532 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.03.2021 KR 20210031398**

(71) Applicant: **Kim, Baerim**
**Daejeon 35385 (KR)**

(72) Inventors:
• **KIM, Minyoung**
**Daejeon 35385 (KR)**
• **KIM, Baerim**
**Daejeon 35385 (KR)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **METHOD AND SYSTEM FOR FUND CREATION AND DIVIDEND PROVISION USING ONLINE GAME COMPETITION**

(57)    Proposed is a method for fund creation and dividend provision using an online game competition, the method including: providing, by a game competition server, customer terminals with the online game competition including a plurality of rounds in a tournament format; determining, by the game competition server after the online game competition in the tournament format ends, competition prize rankings of participants, and allocating differentiated dividend rates for differentially providing an investment return dividend according to the competition prize rankings of the customers; and enabling, by the asset management company server, the investment return dividend to be transferred to each customer's fund account according to the differentiated dividend rates, wherein the investment return dividend is a dividend for an investment return produced by converting the participation fees paid to the fund accounts at the asset management company server into a fund and managing the fund.

Fig. 1

Flowchart:
Start → Becoming members (S10) → Paying competition participation fees to fund accounts (S12) → Participating in competition (S14) → Classifying participants into prizewinners and non-prizewinners (S16) → Yes → Competition ends (S18) → Determining prize rankings in competition (S20) → Determining differentiated dividend rates according to prize rankings (S22) → Differentially distributing investment return according to prize rankings (S26) → End

[Fund investment management] (S24): Stocks, Bonds, Real estate, Derivative products, Real assets

Investment return

EP 4 307 203 A1

## Description

## Technical Field

The present disclosure relates to a method and a system for an asset management company to create a fund using an online game competition for customers and differentially provide an investment return dividend according to prize rankings of competition participants. More particularly, the present disclosure relates to a method of creating a public offering fund and paying a dividend, wherein when multiple customers pay competition participation fees for an online game competition held by an asset management company for fund creation and participate in the game competition, the asset management company converts the competition participation fees paid by the multiple customers into a fund for investment management, and a dividend for an investment return produced by managing the fund is differentially provided according to competition results of the customers.

## Background Art

A fund is a financial investment product in which an asset management company invests money collected from a large number of unspecified individuals into stocks, bonds, real estate, derivative products, and real assets and distributes an investment return to the customers. According to a press release from the Korea Financial Investment Association in 2019 regarding funds, there are 291 asset management companies operating in the Republic of Korea, and the scale of fund management assets is 650 trillion won. Considering the asset management scale, it can be said that funds have a significant impact not only on the customers of the funds and the asset management companies but also on the national economy and even the global economy.

Despite the fact that funds are financial investment products that go beyond individual financial means and have a significant impact on the national economy and meet the demands of the times for economic revitalization, a large number of common people do not have the economic conditions to join the funds. Therefore, in order to obtain a large amount of winnings by investing a small amount rather than the funds, the people rely on highly risky speculative opportunity products, such as LOTTO lottery or Sports Toto, where they lose the entire amount they purchased if they do not win.

This phenomenon is not only limited to South Korea, but is seen as a common behavior pattern among people facing challenging economic conditions in both Eastern and Western societies to transform their lives. The problem is that unlike the funds in which money collected from the majority is invested into stocks, bonds, real estate, derivative products, and real assets and investment return is distributed, speculative opportunity products, such as LOTTO lottery or Sports Toto, are zero-sum games that collect money from many people and return only a portion of the collected money to winners. Therefore, the speculative opportunity products are structured to cause economic damage to all participants except for the few who win.

Herein, how much damage the speculative opportunity products cause to common people will be described in more detail. The total sales of LOTTO lottery in 2019 announced by the Lottery Commission under the Ministry of Economy and Finance in Korea is 4.3702 trillion won. The total sales of Sports Toto in 2019 announced by the Korea Sports Promotion Foundation is 4.8000 trillion won. Considering that 50 % of the sale money of the lottery is provided as winning money and 70 % of the sale money of Sports Toto is provided as a refund, the wealth of customers who purchased the products as of 2019 decreased by 3.6251 trillion won. Also considering the illegal Sports Toto sales of 20.5000 trillion won in 2019 investigated by National Gambling Control Commission under the Prime Minister's Office in Korea, it was found that an astronomical amount of money beyond imagination was collected from economically and socially disadvantaged people's pockets and legally and illegally spent as opportunity costs to dream of turning their lives around.

However, the most serious problem of all is that whether legal or illegal, speculative opportunity products, which push economically and socially disadvantaged people into increasingly harsh environments, are being sold like hot cakes every year. This is a very unfortunate thing socially and nationally, and it is a problem that must be resolved for the economic development of the common people.

## Disclosure

## Technical Problem

The present disclosure is directed to enable ordinary people to make effective financial investments from a public offering fund product, which was previously possible only with a large investment, by investing even a small amount.

In addition, the present disclosure is directed to decrease the demand for speculative opportunity products, such as LOTTO lottery or Sports Toto, which make the purchasers lose the entire amount they purchased if they do not win.

In addition, the present disclosure is directed to promoting economic revitalization by expanding a customer base who will apply for membership in a public offering fund.

In addition, the present disclosure is directed to sell a financial investment product that is a combination of investment finance and a game to allow customers to experience a new type of financial investment product that adds fun to investment.

It is to be understood that technical problems to be solved by the present disclosure are not limited to the aforementioned technical problems and other technical problems which are not mentioned will be apparent from the following description.

Technical Solution

According to an embodiment of the present disclosure, there is provided a method for fund creation and dividend provision using an online game competition, wherein an asset management company server creates a fund using the online game competition and differentially provide an investment return dividend according to competition results of participants, the method including: (a) receiving, from customer terminals, personal information for participating in the online game competition held for fund creation, and allowing each customer to become a member, and creating a fund account for each customer; (b) transmitting, to the customer terminals, a request to pay a participation fee for participating in the online game competition such that the participation fee for each customer is paid to the fund account; (c) providing, by an online game server, the customer terminals with online games including a plurality of rounds in a tournament format; (d) determining, by the online game server after the online game competition in the tournament format ends, competition prize rankings of the participants in the competition, and allocating differentiated dividend rates for differentially providing the investment return dividend, which results from managing the fund on the basis of the amount paid to the fund accounts, according to the competition prize rankings of the customers; and (e) enabling, by the asset management company server, an investment return produced from management based on the amount paid to the fund accounts, to be transferred to each customer's fund account according to the differentiated dividend rates.

The step (c) may include providing, by the online game server, the customer terminals with the online games that are played in the plurality of rounds in the tournament format and are conducted until one first place winner is determined.

The step (c) may include providing, by the online game server, the customer terminals with a competition name, competition participation date and time, competition results, the number of the participants in the competition, and a fund creation amount.

The step (d) may include classifying, by the online game server, the participants in the game competition into prizewinners and non-prizewinners according to the competition results, and classifying the prizewinners by the prize rankings, and allocating the differentiated dividend rates to differentially provide the investment return dividend to each of the customers.

According to another embodiment of the present disclosure, there is provided a system for creating a fund using an online game competition and differentially providing an investment return dividend according to participants' competition results, the system including: a plurality of customer terminals; and a game competition server communicating with the plurality of customer terminals, wherein the game competition server is configured to provide the plurality of customer terminals with online games played in a plurality of rounds, and allocate differentiated dividend rates for differentially providing a dividend for an investment return, which results from managing the fund on the basis of the participation fees paid by the participants, according to online game competition results of the participants, and request the plurality of customer terminals to pay the participation fee for participating in the online game competition such that each customer's participation fee is transferred to a fund account, wherein the amount transferred to the fund accounts is managed as the fund by an asset management company server, and the online game server is configured to enable the investment return, which results from managing the fund, to be transferred to each customer's fund account on the basis of the differentiated dividend rates.

The game competition server may be configured to enable the investment return, which is determined according to fund management investment performance of the asset management company server, to be distributed to the participants at the same prize ranking according to the differentiated dividend rates.

The game competition server may be configured to provide online game participation history information to each of the plurality of customer terminals.

**Advantageous Effects**

According to the present disclosure, the demand for speculative opportunity products, such as LOTTO lottery or Sports Toto, which make the purchasers lose the entire amount they purchased if they do not win, can be significantly decreased.

According to the present disclosure, economic revitalization can be promoted by expanding a customer base who will apply for fund membership.

According to the present disclosure, a financial investment product that is a combination of investment finance and a game is sold, allowing customers to experience a new type of financial investment product that adds fun to investment.

**Description of Drawings**

FIG. 1 is a schematic configuration diagram illustrating a method for fund creation and dividend provision using an online game competition, according to an embodiment of the present disclosure.

FIG. 2 is a diagram illustrating a system in which customers participate in an online game competition, according to an embodiment of the present disclosure.

FIGS. 3a and 3b are diagram illustrating a process in which a competition participation fee is converted into a fund when a customer participates in an online game competition, according to an embodiment of the present disclosure.

FIG. 4 is a diagram illustrating how an online game competition takes place, for example, according to an embodiment of the present disclosure.

FIGS. 5a and 5b are diagrams illustrating a screen showing how an online game competition goes, according to an embodiment of the present disclosure.

FIG. 6 is a diagram illustrating how an online game competition for fund creation takes place on a homepage of an asset management company that manages a fund, according to an embodiment of the present disclosure.

FIG. 7 is a diagram illustrating a method of selecting prizewinners of an online game competition, according to an embodiment of the present disclosure.

FIG. 8 is a diagram illustrating that investment return dividend rates are differentiated and provided depending on competition results in an online game competition, according to an embodiment of the present disclosure.

FIG. 9 is a diagram illustrating a customer's own online game competition account, according to an embodiment of the present disclosure.

FIG. 10 is a diagram illustrating an outline of an online game competition, according to an embodiment of the present disclosure.

FIG. 11 is a diagram illustrating a sale order window that allows a customer to repurchase a fund held by the customer at any time even before maturity, according to an embodiment of the present disclosure.

FIGS. 12a to 12c are diagrams illustrating the effect that a public offering fund of the present disclosure will have on home economy and national economy, according to an embodiment of the present disclosure.

**Best Mode**

Hereinafter, embodiments of the present disclosure will be described in detail with reference to the accompanying drawings.

A variety of modifications may be made to the embodiments and there are various embodiments, so particular embodiments are shown in the drawings and will be described in detail. However, the present disclosure is not limited thereto, and the embodiments can be construed as including all modifications, equivalents, or substitutes included in the disclosed idea and technical scope.In describing the embodiments, it it is decided that a detailed description of the known art related to the present disclosure makes the subject matter of the present disclosure unclear, the detailed description will be omitted.

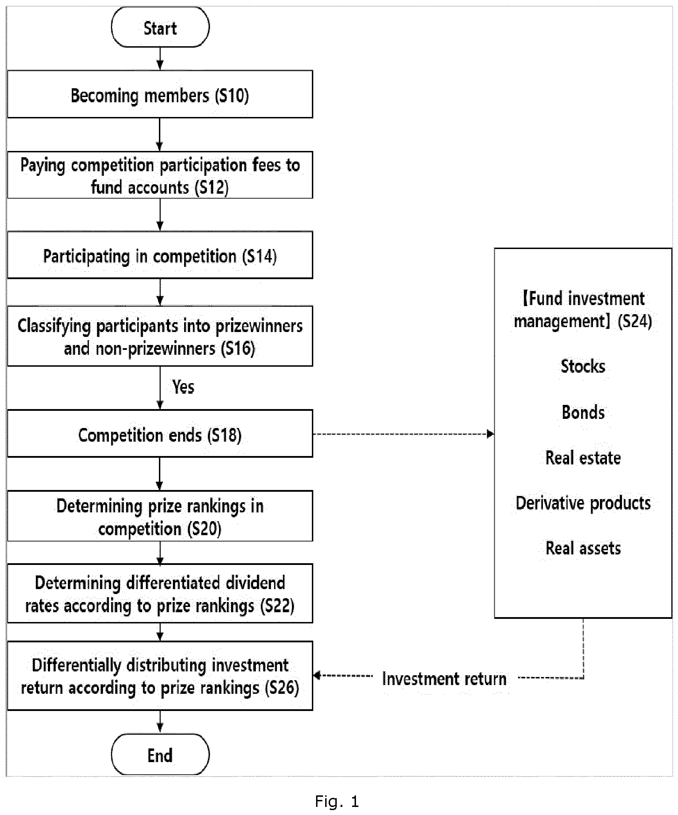

FIG. 1 is a schematic configuration diagram illustrating a method for fund creation and dividend provision using an online game competition, according to an embodiment of the present disclosure.

First, customers who want to participate in an online game competition become members of an online game competition system 1 according to the present disclosure over the Internet in step S10. The customers who want to participate in the competition pay competition participation fees to their fund accounts in step S12, access the game competition server to participate in the competition in step S14, and play a plurality of tournament rounds until they win the competition or lose in the middle. The game competition server classifies the competition participants into prizewinners and non-prizewinners of the competition in step S16. For example, steps S10 to S16 may be repeatedly performed with respect to a plurality of participants. Once a fund creation amount is completed, the competition is terminated in step S18 so that no more new participants join.

After the competition is terminated, the game competition server determines the prize rankings of the competition participants in step S20, and determines differentiated dividend rates according to the prize rankings in step S22 so as to differentially distribute an investment return made by investing a fund. When fund creation is completed (competition is terminated) in step S18, the asset management company manages the fund by investing in an investment product specified in a competition outline in step S24. When a fund management period ends, the investment return made by managing the fund is distributed to each of the customers according to a dividend return rate determined for each customer in step S26. Step S24 may be performed in parallel with steps S20 to S22.

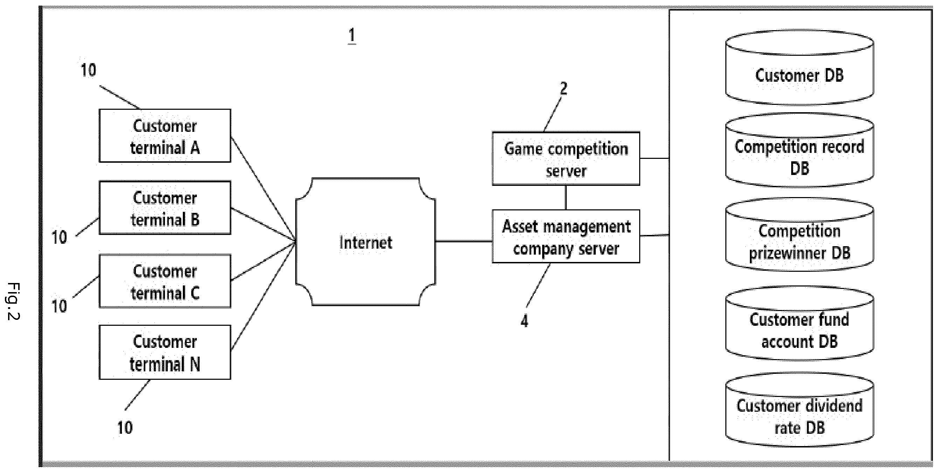

FIG. 2 is a diagram illustrating a system 1 in which customers participate in an online game competition, according to an embodiment of the present disclosure.

According to the present disclosure, an online game competition system 1 includes a plurality of customer terminals 10, and an asset management company server 4 connected to the customer terminals 10 over a wired/wireless network such as the Internet. The asset management company server 4 is connected to a game competition server 2, which holds an online game competition for fund creation. The asset management company server 4 stores data such as a customer DB, a competition record DB, a competition prizewinner DB, a customer fund account DB, and a customer dividend rate DB. These pieces of data information are shared with the game competition server 2. The customer terminals 10 are not limited to any specific types of devices, such as computers, smartphones, PDAs, and stations, as long as the devices are connected to the network.

Although the asset management company server 4 and the game competition server 2 are physically separated from the customer terminals 10, communication with the customers is made through various applications or programs provided by the servers.

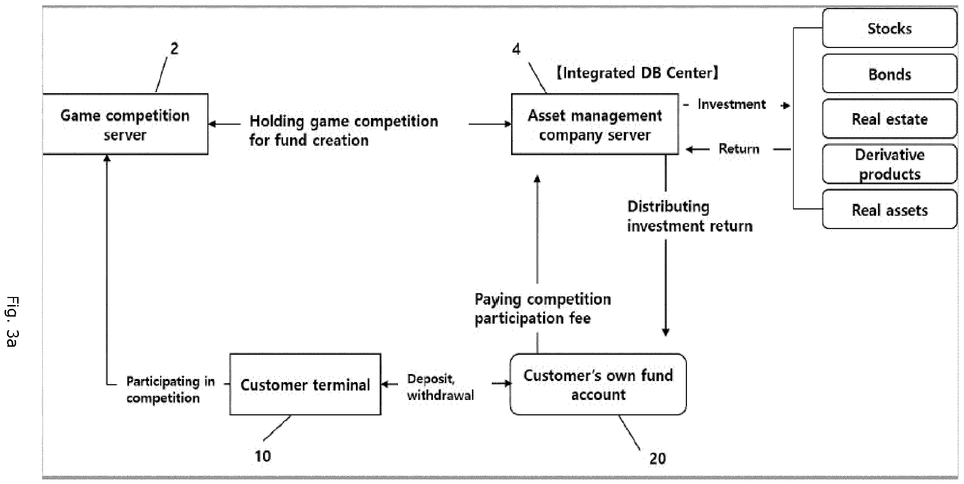

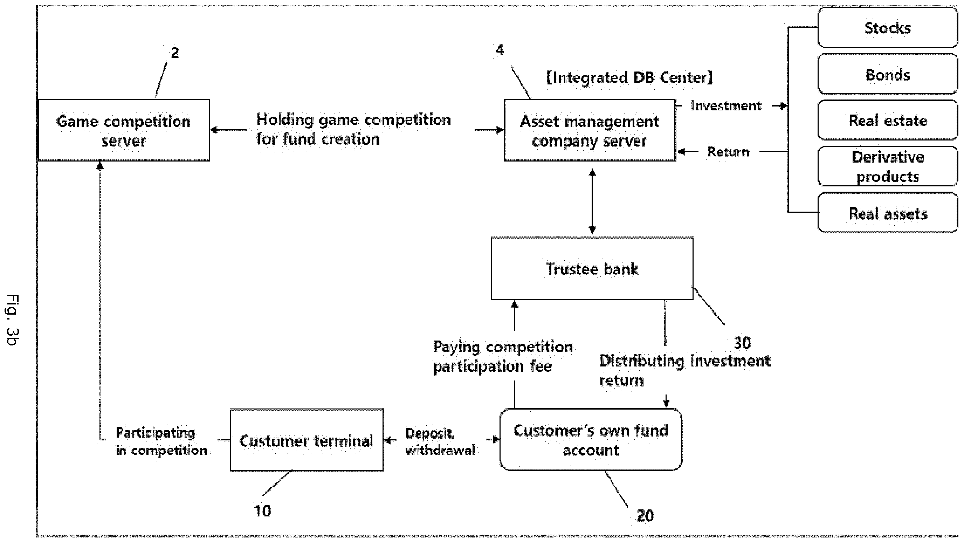

FIGS. 3a and 3b are diagram illustrating an example situation to describe a process in which a competition participation fee is converted into a fund when a customer participates in an online game competition, according to an embodiment of the present disclosure.

As shown in FIG. 3a, a customer accesses a game competition server 2 through his or her customer terminal 10 and pays a competition participation fee to the customer's own fund account 20 in order to participate in an online game competition. Before this, an asset management company server 4 may receive, from the customer terminal 10, personal information (name, date of birth, and address) for participating in an online game competition held for fund creation, and allows each customer to become a member. In this process, each customer's fund account may be created. After accessing the game competition server 2 through the customer terminal 10, the customer may enable a participation fee to be transferred from his or her account to his or her fund account through an interface provided by the game competition server 2, or may access another financial company server (not shown) to perform the above operation. Alternatively, the customer may access the asset management company server 4 to transfer the participation fee.

When participation fees paid by users who want to participate in the online game competition, that is, the sum of participation fees paid to the fund accounts of the respective customers, reach a desired amount and a fund is created, the asset management company server 4 performs a task of investing the fund in stocks, bonds, real estate, derivative products, and real assets and obtaining return.

The game competition server 2 holds the online game competition with a plurality of customers as participants, and determines differentiated investment return dividend rates according to competition results, that is, competition rankings of the customers. The asset management company server 4 distributes the dividend determined on the basis of the differentiated investment return dividend rate information to the customers' own fund accounts 20 as investment returns.

FIG. 3b shows another method in which customers pay competition participation fees to a trustee bank 30 designated by an asset management company and an investment return is distributed to the customers' own fund accounts 20 also through the trustee bank 30.

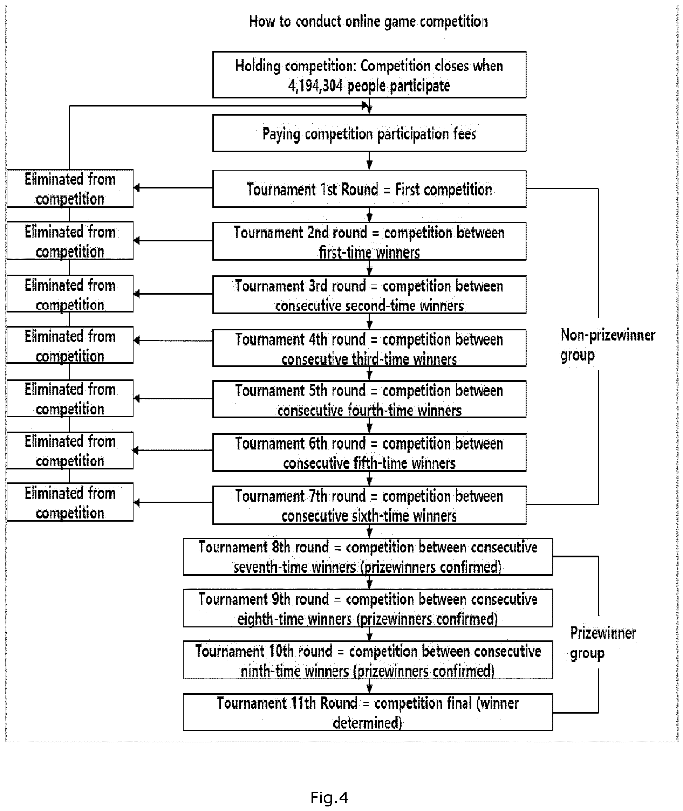

FIG. 4 is a diagram illustrating a process in which an online game competition that four players participate in takes place in a plurality of tournament rounds, for example, according to an embodiment of the present disclosure.

As described above, when a customer becomes a member and pays a competition participation fee in step S12, a game provided by a game competition server 2 is provided to a customer terminal 10 and the customer participates in a tournament first round competition.

In the meantime, when the customer wins the game, he or she advances to a tournament second round and plays a game. When the customer loses the tournament first round, the customer returns to a competition participation fee payment standby state for the next competition. When the customer continues to win games and advances to a tournament n-th round and it is determined that the customer receives a prize for the competition, the game competition server 2 determines a differentiated investment return dividend rate according to a competition prize ranking. During this step, when the customer loses the tournament first round, ..., and n-th round, or when the customer does not receive a prize for the competition despite passing the rounds, the customer returns to the competition participation fee payment standby state for the next competition.

In addition, in order for the competition to proceed until one final winner is determined in the eleventh round, a total of 4,194,304 people including duplicate participants need to participate in the tournament first round.

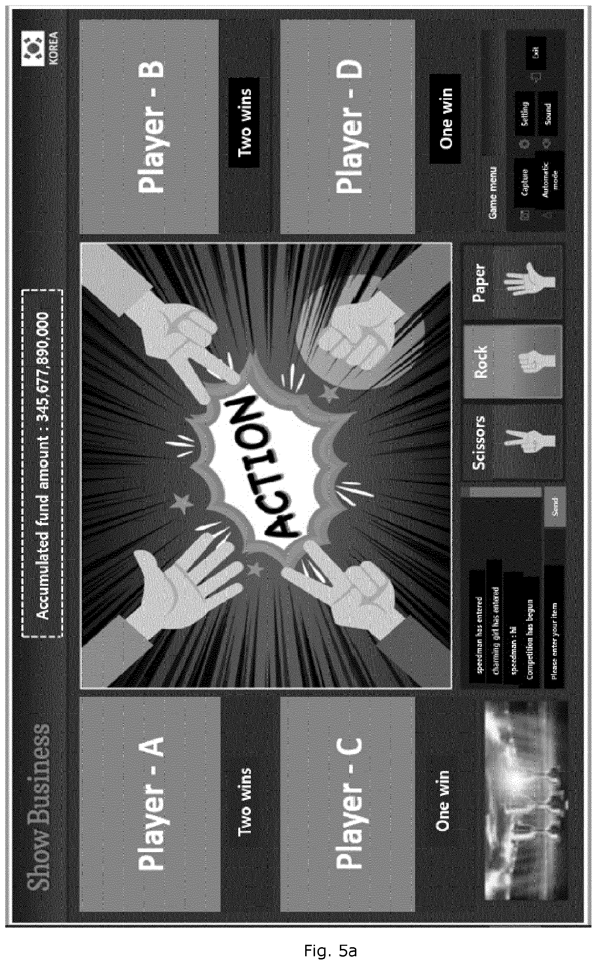

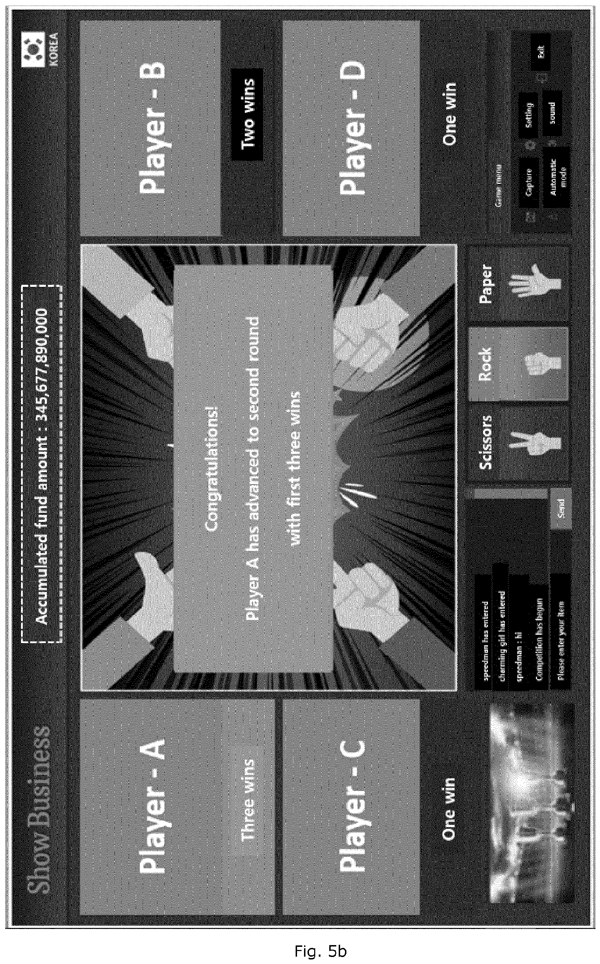

FIGS. 5a and 5b are diagrams illustrating a screen showing how an online game competition of customers goes, according to an embodiment of the present disclosure. The screen showing the game is automatically displayed on a customer terminal 10 when a customer accesses a game competition server 2.

FIG. 5a is a diagram illustrating four participants play the "Rock Paper Scissors" game. A total of four participants each choose one of the scissors, rock, and paper options displayed at the bottom of the competition screen to determine winners and losers. In FIG. 5a, it can be seen that player A and player B each already have a history of two wins and player C and player D each have a history of one win.

At the bottom of the screen, the action ("rock") the customer takes is converted to color for easy recognition. It is preferable for a game menu to include a capture function so that the customer determines whether a game process is fair and fair play is encouraged. The top of the screen displays an accumulated fund amount obtained by accumulating competition participation fees from all customers participating in the "Rock Paper Scissors" game. The accumulated fund amount is calculated by multiplying a predetermined participation fee by the number of participants, so data fair and objective to everyone is provided to actively promote games.

FIG. 5b is a diagram illustrating that player A meets a competition victory condition in the tournament first round competition and advances to the tournament second round.

The "Rock Paper Scissors" game is merely an example of conducting a competition. It is to be understood that competitions may be conducted in a variety of ways.

The game competition server 2 may provide each customer terminal 10 with information on a game competition name, competition participation date and time, a competition result, the number of competition participants, and a fund creation amount based on a participation fee.

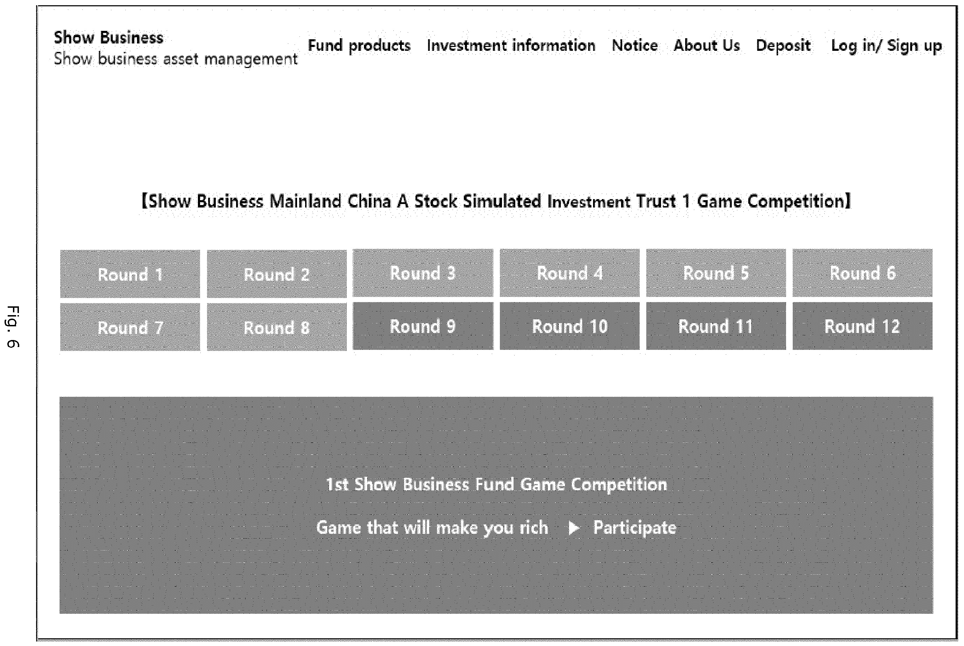

FIG. 6 is a diagram illustrating how an online game competition takes place on a homepage of an asset management company that manages a fund, according to another embodiment of the present disclosure. It should be noted that although games are played on the asset management company homepage, holding and conducting games and determining dividend rates are routines performed by a game competition server 2.

In FIG. 6, the "Mainland China A Stock Simulated Investment Trust 1 Game Competition" under the title "First Show Business Fund Game Competition" is currently being help up to the eighth round and such information is lighted in red to inform customers. The ninth round and the subsequent rounds of the competition have not conducted and such information is lighted in blue to inform the customers. In this way, different colors may be used for notification.

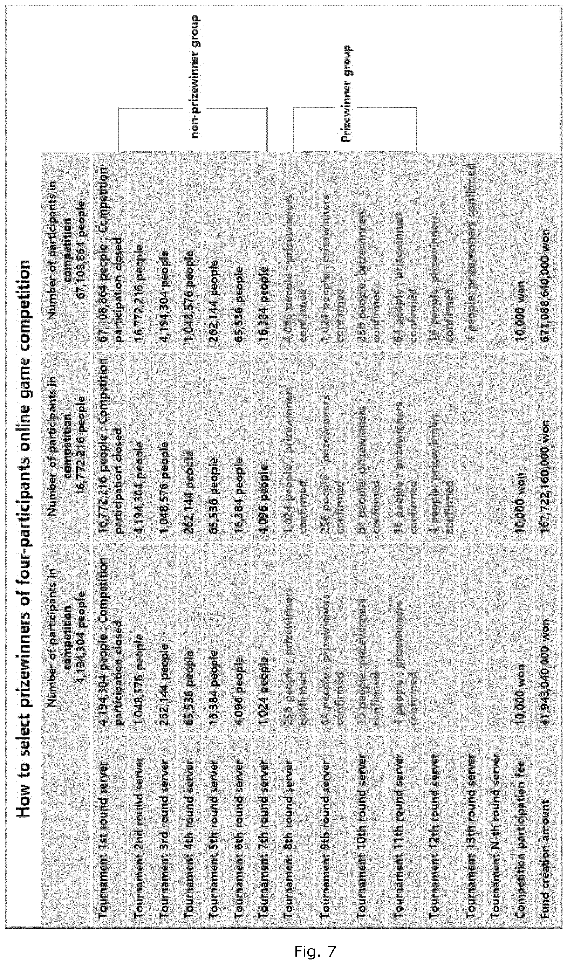

FIG. 7 is a diagram illustrating a method of selecting prizewinners of a four-participants online game competition.

As described above, when it is intended to select one first place winner in the eleventh round, calculation is made with a geometric progression starting from the eleventh round to the first round in order by multiplying the number, "4", of players who passes the eleventh round. Therefore, a total of 4,194,304 people need to participate in the tournament first round of the competition, and the competition participants may be classified into prizewinners and non-prizewinner through each round, and one first place winner is selected in the final tournament eleventh round. Since receiving prizes cannot be duplicated, the participants who reach the eighth round and the subsequent rounds are determined as prizewinner. After the eighth round, competition rankings are determined for each round. That is, the players who lose the eighth round belong to a joint fifth place group, the players who lose the ninth round belong to a joint fourth place group, the players who lose the tenth round belong to a joint third place group, the players who lose the eleventh round belong to a joint second place group, and the player who wins the eleventh round is determined as the final winner. In addition, when a competition participation fee is 10,000 won, the total fund-raised amount is 41,943,040,000 won. This data is displayed as fair and objective data on the game screen.

Similarly, when it is intended to select one first place winner in the twelfth round, a total of 16,722,216 people need to participate in the tournament first round. Competition prizewinners and competition rankings are determined in the same method as described above.

In addition, when it is intended to determine prizewinners and prize rankings in the thirteenth round, the same method is used.

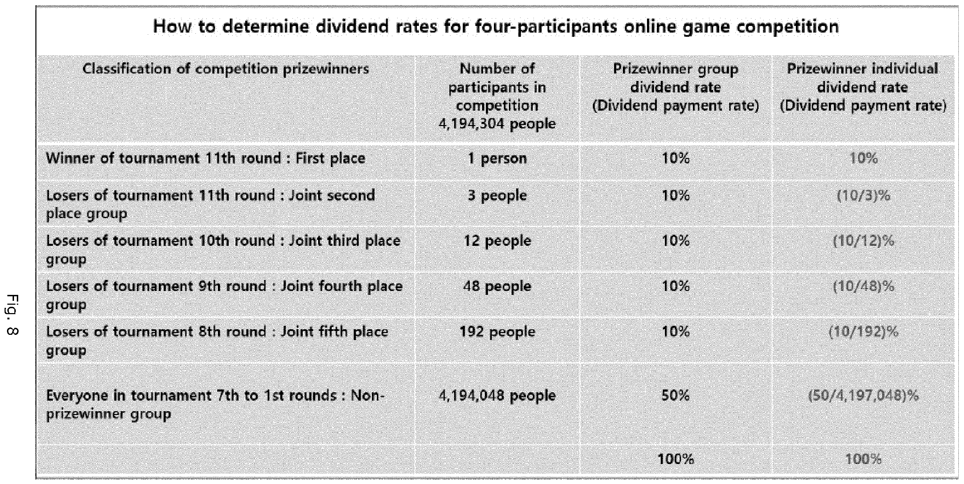

FIG. 8 is a diagram illustrating that investment return dividend rates are differentiated and applied depending on competition prize rankings according to competition results of a four-participants online game competition, according to an embodiment of the present disclosure.

Competition results of an online game competition are selected and managed by an online game server, and differential investment return dividend rates for participants are determined by the online game server or an asset management company server.

Dividend provision rates for the investment return of the asset management company are determined on the basis of prize rankings of customers participating in the competition. As shown in the drawing, percentages are determined with division into winning groups, and each individual dividend rate is determined according to the number of participants belong to a corresponding group. For example, a joint fifth place group has a dividend rate of 10 % applied to each winning group and there are 192 competition prizewinners corresponding to the fifth place group, so it is found that the dividend rate for each of the competition prizewinners belonging to the fifth place group is (10/192) %.

This is merely an example of differentiated dividend rates according to competition results of an online game competition. It is to be understood that differentiated dividend rates may be implemented in more diverse ways.

When the number of participants participating in games is M and a participation fee per person is Z and a fund return rate managed by the asset management company server 4 is X %, the return amount obtained by fund management is $M \times Z \times X$.

In the meantime, assuming that investment return rates jointly distributed to the first to N-th placed user groups in games are $Y_1 \sim Y_N$ %, respectively, and when the number of users who tied for the i-th prize is $A_i$, the investment return rate provided to each user is $Y_i/A_i$.

It is not preferable that an investment return amount distributed to all participants exceeds a return amount obtained by fund management. Therefore, it is preferable that the sum of $Y_1$ to $Y_N$ is set not to exceed 100 %.

In addition, it is natural to set an investment return rate, that is, a $Y_i/A_i$ value, provided to each user to decrease as the ranking of prizewinners goes down from the first place to later places.

In addition, it is preferable that even users who are not ranked in the top range, that is, preset rankings, receive a predetermined amount of financial compensation, by setting the investment return rate for defeated users to a predetermined value, for example, 50 %.

According to an embodiment, in the games, it may be determined that an investment return rate of a % may be provided to the first place prizewinner and an investment return rate of b % may be provided to the second to N-th place prizewinner groups. The a and b may be set to the same value. Even when it is determined that the second to N-th place prizewinner groups equally receive the investment return rate of b %, as the ranking goes lower, the number of users belonging to a corresponding ranking group increase. Therefore, the lower the ranking, the smaller the received return amount.

In addition, according to another embodiment of the present disclosure, a return amount may be differentially distributed even between the users belonging to the same ranking group.

Specifically, to prevent a small number of users from monopolizing an investment return amount for a long period of time, the return amount distributed in the same ranking group may be set, on the basis of the sum of the return amount or the return rate provided to each user for a predetermined period of time in the past, to be inversely proportional to the sum or the return rate.

For example, when there are a total of M users in an N-th place group and the total return amount provided to the M users is P and an i-th user belonging to the ranking group has received a return rate of $S_i$% (e.g., if there was no return, a return rate is normalized to 100 %, but if there was a return of 20 %, a return rate is 120 %) for a preset past period of time, a return amount provided to each user may be determined as follows.

[Equation 1]

$$P_i = P \cdot \frac{\dfrac{1}{S_i}}{\displaystyle\sum_{i=1}^{M} \dfrac{1}{S_i}}$$

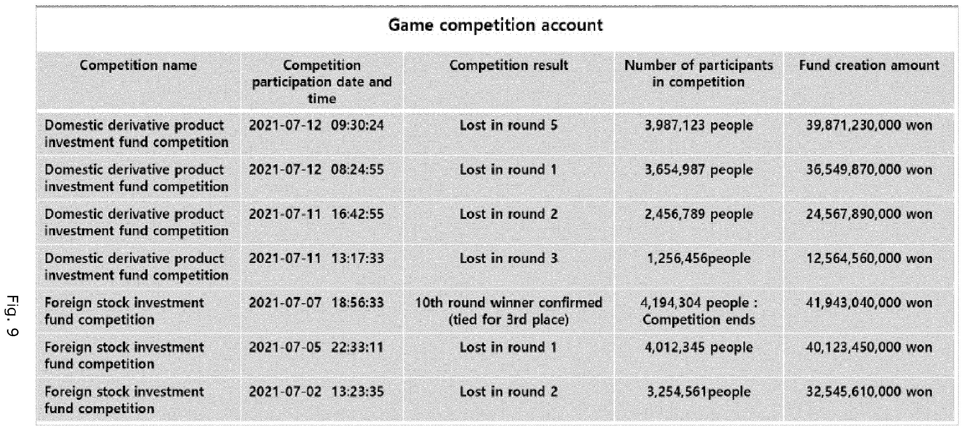

FIG. 9 is a diagram illustrating a customer's own online game competition participation account, according to an embodiment of the present disclosure. Game account information is data provided by a game competition server 2, and a customer may check his or her game participation history. In the drawing, it is found that the customer participated in a total of seven online game competitions regarding domestic derivative product and foreign stock fund investment competitions from 2 July 2021 to 12 July 2021.

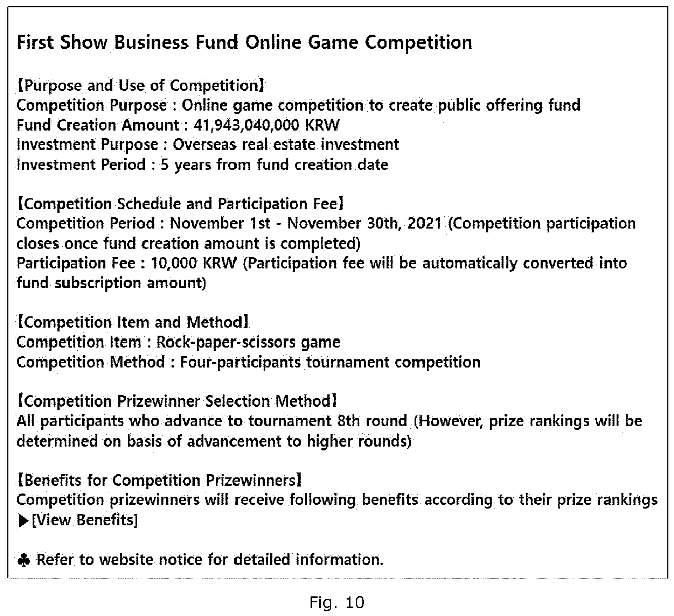

FIG. 10 is a diagram illustrating an outline of an online game competition, according to an embodiment of the present disclosure. In the shown example, under the title "First Show Business Fund online game competition", competition operation, competition schedule, a competition item, a participation method, a method of selecting competition prizewinners, and benefits for prizewinners are announced. The game competition outline is provided by an asset management company homepage.

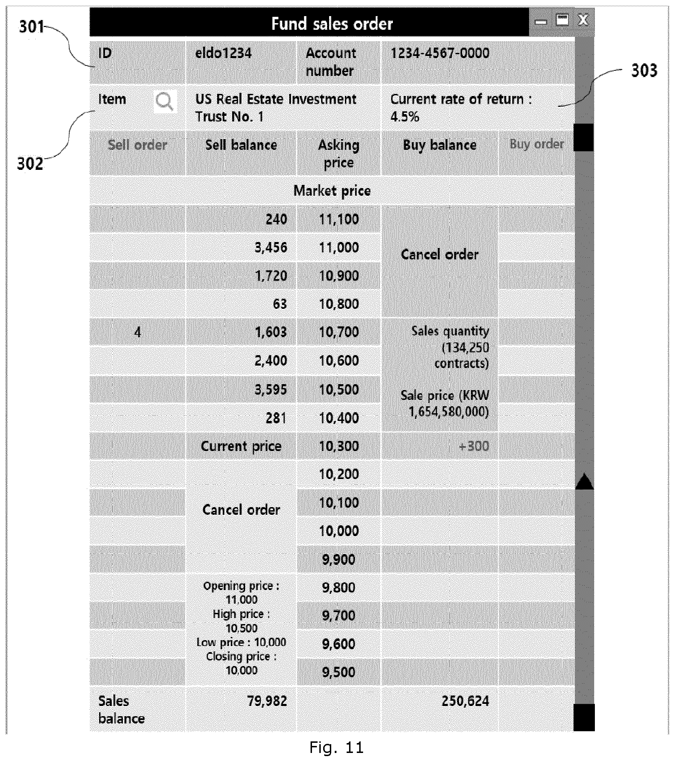

FIG. 11 is a diagram illustrating a trading system that allows a customer to encash his or her fund at any time, according to an embodiment of the present disclosure.

In the shown example, it can be seen that information providing matters, such as a customer ID 301, a fund item 302, and a fund return rate 303, and order quantity for each selling price are arranged in a buy window and a sell window.

Therefore, the diagram is intended to describe that a fund held by the customer can be repurchased at any time even before maturity.

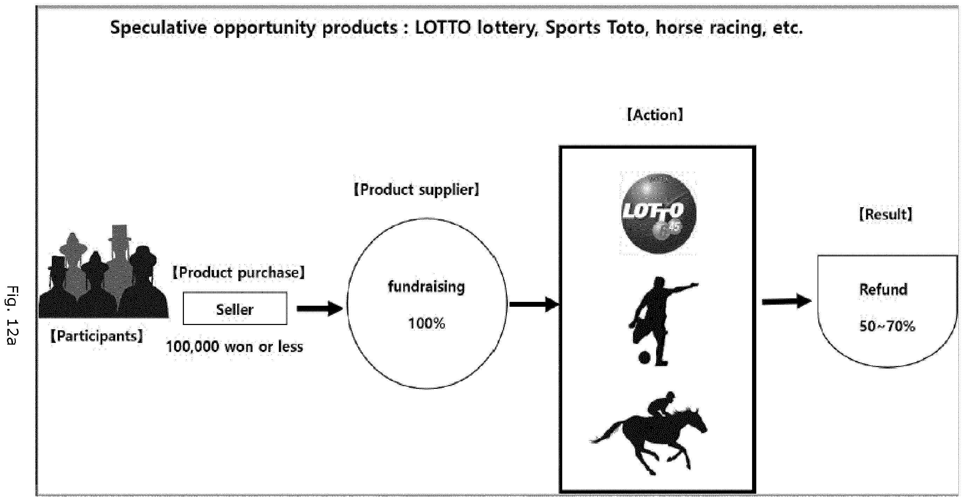

FIGS. 12a to 12c are diagrams illustrating the effect that a public offering fund of the present disclosure will have on home economy and national economy, according to an embodiment of the present disclosure.

As shown in FIG. 12a, speculative opportunity products, such as LOTTO lottery, Sports Toto, and horse racing, are structured in such a way that money is collected from a large number of participants in difficult economic circumstances and 50 to 70 % of the collected money is provided only to a small number of participants who are considered prizewinners.

Therefore, there is a serious problem that many participants who do not win lose the entire amount they purchased, putting them in an even worse economic situation.

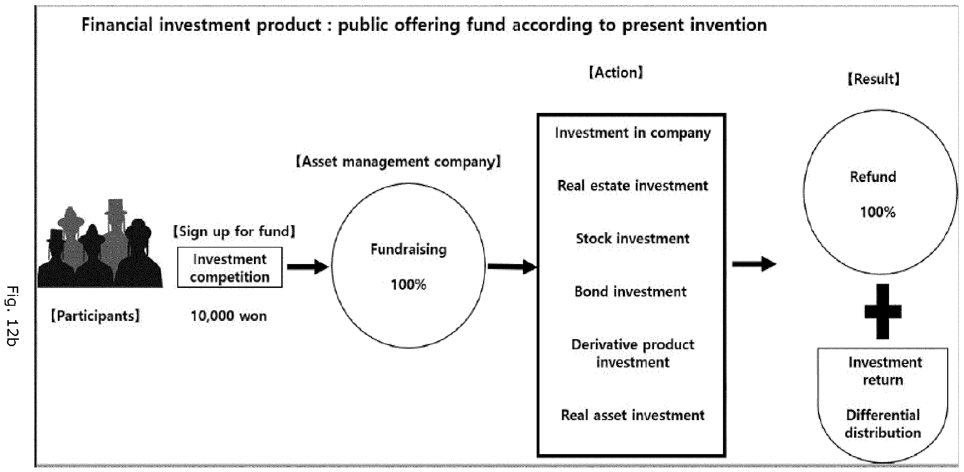

In contrast, as shown in FIG. 12b, a public offering fund according to the present disclosure is structured such that money is collected from many participants and invested in industries, such as companies, real estate, stocks, bonds, derivative products, or real assets, where productivity is guaranteed and a dividend for an investment return produced by investing the fund is differentially provided according to customers' competition results, thereby facilitating investment even with a small amount of money corresponding to a competition participation fee.

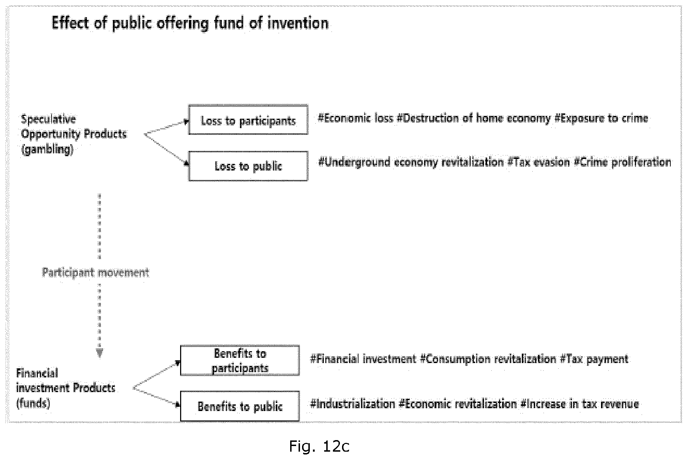

FIG. 12c is a diagram illustrating the difference between a speculative opportunity product and a public offering fund according to the present disclosure, which have a similar process of raising money from many people but the results are significantly different.

For example, according to a survey on the size of the gambling industry in 2019 which was conducted by the National Gambling Control Commission under the Prime Minister's Office in Korea, the legal gambling industry was estimated at 22.7000 trillion won, the illegal gambling industry was estimated at 81.5000 trillion won, and the total sales of the legal gambling industry and the illegal gambling industry was estimated at 104.2000 trillion won.

Therefore, a public offering fund according to the present disclosure, in which anyone can easily participate and small investments are possible, contributes greatly to the public interest as well as the interests of individual market participants by flowing funds that might flow to the gambling industry into industries for investment and promoting economic revitalization.

The above description of the present disclosure is for illustrative purposes, and those skilled in the art will understand that the present disclosure can be easily modified into other specific forms without changing the technical idea or essential characteristics of the present disclosure. Therefore, it should be understood that the embodiments described above are illustrative in all aspects as and not restrictive. For example, each element described as unitary may be realized in a distributed manner. Similarly, elements described as distributed may also be realized in a combined form.

The scope of the present disclosure is characterized by the appended claims, and it should be construed that all alterations or modifications derived from the meaning and scope of the appended claims and the equivalents thereof fall within the scope of the present disclosure.

## Claims

1. A method for fund creation and dividend provision using an online game competition, the method comprising:

   (a) receiving, from customer terminals by an asset management company server, personal information for participating in the online game competition held for fund creation, and allowing each customer to become a member, and creating a fund account for each customer;
   (b) transmitting, to the customer terminals by a game competition server, a request to pay a participation fee for participating in the online game competition such that the participation fee for each customer is paid to the fund account at the asset management company server;
   (c) providing, by the game competition server, the customer terminals with the online game competition including a plurality of rounds in a tournament format;
   (d) determining, by the game competition server after the online game competition in the tournament format ends, competition prize rankings of participants, and allocating differentiated dividend rates for differentially providing an investment return dividend according to the competition prize rankings of the customers; and
   (e) enabling, by the asset management company server, the investment return dividend to be transferred to each customer's fund account according to the differentiated dividend rates,

   wherein the investment return dividend is a dividend for an investment return produced by converting the participation fees paid to the fund accounts at the asset management company server into a fund and managing the fund.

2. The method of claim 1, wherein in the step (c), the game competition server provides the customer terminals with the online game competition that takes place in the plurality of rounds in the tournament format and is conducted until one first place winner is determined.

3. The method of claim 1, wherein in the step (c), the online game server provides a competition name, competition participation date and time, competition results, the number of the participants in the competition, and a fund creation amount to the customer terminals.

4. The method of claim 1, wherein in the step (d), the game competition server classifies the participants in the game competition into prizewinners and non-prizewinners according to competition results of the participants, and classifies the prizewinners by the prize rankings to differentially provide the investment return dividend to each of the customers.

5. A system for fund creation and dividend provision using an online game competition, the system comprising:

   a plurality of customer terminals; and
   a game competition server communicating with the plurality of customer terminals,
   wherein the game competition server is configured to

   provide the plurality of customer terminals with online games played in a plurality of rounds, and allocate differentiated dividend rates for differentially providing an investment return dividend according to online game competition results of participants, and
   request the plurality of customer terminals to pay a participation fee for participating in the online game competition such that each customer's participation fee is paid to a fund account at an asset management company server,

   the investment return dividend is a dividend for an investment return produced by converting the participation fees paid to the fund accounts at the asset management company server into a fund and managing the fund, and
   the asset management company server is configured to enable the investment return dividend to be transferred to each customer's fund account on the basis of the differentiated dividend rates.

6. The system of claim 5, wherein the asset management company server is configured to enable the investment return dividend to be transferred to each customer's fund account on the basis of the differentiated dividend rates, and distribute the investment return dividend equally to the participants at the same prize ranking.

7.  The system of claim 5, wherein the game competition server is configured to provide online game participation history information to each of the plurality of customer terminals.

Fig. 1

Fig.2

Fig. 3a

Fig. 3b

How to conduct online game competition

Holding competition: Competition closes when
4,194,304 people participate

Paying competition participation fees

Eliminated from
competition ← Tournament 1st Round = First competition

Eliminated from
competition ← Tournament 2nd round = competition between
first-time winners

Eliminated from
competition ← Tournament 3rd round = competition between
consecutive second-time winners

Eliminated from
competition ← Tournament 4th round = competition between
consecutive third-time winners

Non-prizewinner
group

Eliminated from
competition ← Tournament 5th round = competition between
consecutive fourth-time winners

Eliminated from
competition ← Tournament 6th round = competition between
consecutive fifth-time winners

Eliminated from
competition ← Tournament 7th round = competition between
consecutive sixth-time winners

Tournament 8th round = competition between consecutive
seventh-time winners (prizewinners confirmed)

Tournament 9th round = competition between consecutive
eighth-time winners (prizewinners confirmed)

Prizewinner
group

Tournament 10th round = competition between consecutive
ninth-time winners (prizewinners confirmed)

Tournament 11th Round = competition final (winner
determined)

Fig.4

Fig. 5a

Fig. 5b

Fig. 6

Fig. 7

## How to select prizewinners of four-participants online game competition

| | Number of participants in competition 4,194,304 people | Number of participants in competition 16,772,216 people | Number of participants in competition 67,108,864 people |
|---|---|---|---|
| Tournament 1st round server | 4,194,304 people : Competition participation closed | 16,772,216 people : Competition participation closed | 67,108,864 people : Competition participation closed |
| Tournament 2nd round server | 1,048,576 people | 4,194,304 people | 16,772,216 people |
| Tournament 3rd round server | 262,144 people | 1,048,576 people | 4,194,304 people |
| Tournament 4th round server | 65,536 people | 262,144 people | 1,048,576 people |
| Tournament 5th round server | 16,384 people | 65,536 people | 262,144 people |
| Tournament 6th round server | 4,096 people | 16,384 people | 65,536 people |
| Tournament 7th round server | 1,024 people | 4,096 people | 16,384 people |
| Tournament 8th round server | 256 people : prizewinners confirmed | 1,024 people : prizewinners confirmed | 4,096 people : prizewinners confirmed |
| Tournament 9th round server | 64 people : prizewinners confirmed | 256 people : prizewinners confirmed | 1,024 people : prizewinners confirmed |
| Tournament 10th round server | 16 people: prizewinners confirmed | 64 people: prizewinners confirmed | 256 people: prizewinners confirmed |
| Tournament 11th round server | 4 people : prizewinners confirmed | 16 people : prizewinners confirmed | 64 people : prizewinners confirmed |
| Tournament 12th round server | | 4 people: prizewinners confirmed | 16 people: prizewinners confirmed |
| Tournament 13th round server | | | 4 people: prizewinners confirmed |
| Tournament N-th round server | | | |
| Competition participation fee | 10,000 won | 10,000 won | 10,000 won |
| Fund creation amount | 41,943,040,000 won | 167,722,160,000 won | 671,088,640,000 won |

non-prizewinner group

Prizewinner group

18

Fig. 8

## How to determine dividend rates for four-participants online game competition

| Classification of competition prizewinners | Number of participants in competition 4,194,304 people | Prizewinner group dividend rate (Dividend payment rate) | Prizewinner individual dividend rate (Dividend payment rate) |
|---|---|---|---|
| Winner of tournament 11th round : First place | 1 person | 10% | 10% |
| Losers of tournament 11th round : Joint second place group | 3 people | 10% | (10/3)% |
| Losers of tournament 10th round : Joint third place group | 12 people | 10% | (10/12)% |
| Losers of tournament 9th round : Joint fourth place group | 48 people | 10% | (10/48)% |
| Losers of tournament 8th round : Joint fifth place group | 192 people | 10% | (10/192)% |
| Everyone in tournament 7th to 1st rounds : Non-prizewinner group | 4,194,048 people | 50% | (50/4,197,048)% |
| | | 100% | 100% |



**Game competition account**

| Competition name | Competition participation date and time | Competition result | Number of participants in competition | Fund creation amount |
|---|---|---|---|---|
| Domestic derivative product investment fund competition | 2021-07-12 09:30:24 | Lost in round 5 | 3,987,123 people | 39,871,230,000 won |
| Domestic derivative product investment fund competition | 2021-07-12 08:24:55 | Lost in round 1 | 3,654,987 people | 36,549,870,000 won |
| Domestic derivative product investment fund competition | 2021-07-11 16:42:55 | Lost in round 2 | 2,456,789 people | 24,567,890,000 won |
| Domestic derivative product investment fund competition | 2021-07-11 13:17:33 | Lost in round 3 | 1,256,456people | 12,564,560,000 won |
| Foreign stock investment fund competition | 2021-07-07 18:56:33 | 10th round winner confirmed (tied for 3rd place) | 4,194,304 people : Competition ends | 41,943,040,000 won |
| Foreign stock investment fund competition | 2021-07-05 22:33:11 | Lost in round 1 | 4,012,345 people | 40,123,450,000 won |
| Foreign stock investment fund competition | 2021-07-02 13:23:35 | Lost in round 2 | 3,254,561people | 32,545,610,000 won |

Fig. 9

EP 4 307 203 A1

**First Show Business Fund Online Game Competition**

【Purpose and Use of Competition】
Competition Purpose : Online game competition to create public offering fund
Fund Creation Amount : 41,943,040,000 KRW
Investment Purpose : Overseas real estate investment
Investment Period : 5 years from fund creation date

【Competition Schedule and Participation Fee】
Competition Period : November 1st - November 30th, 2021 (Competition participation closes once fund creation amount is completed)
Participation Fee : 10,000 KRW (Participation fee will be automatically converted into fund subscription amount)

【Competition Item and Method】
Competition Item : Rock-paper-scissors game
Competition Method : Four-participants tournament competition

【Competition Prizewinner Selection Method】
All participants who advance to tournament 8th round (However, prize rankings will be determined on basis of advancement to higher rounds)

【Benefits for Competition Prizewinners】
Competition prizewinners will receive following benefits according to their prize rankings
▶[View Benefits]

♣ Refer to website notice for detailed information.

Fig. 10

301

303

302

| Fund sales order | | | | — ☐ X |
|---|---|---|---|---|
| ID | eldo1234 | Account number | 1234-4567-0000 | |
| Item 🔍 | US Real Estate Investment Trust No. 1 | | Current rate of return : 4.5% | |
| Sell order | Sell balance | Asking price | Buy balance | Buy order |
| | | Market price | | |
| | 240 | 11,100 | | |
| | 3,456 | 11,000 | Cancel order | |
| | 1,720 | 10,900 | | |
| | 63 | 10,800 | | |
| 4 | 1,603 | 10,700 | Sales quantity (134,250 contracts) | |
| | 2,400 | 10,600 | | |
| | 3,595 | 10,500 | Sale price (KRW 1,654,580,000) | |
| | 281 | 10,400 | | |
| | Current price | 10,300 | +300 | |
| | | 10,200 | | |
| | Cancel order | 10,100 | | |
| | | 10,000 | | |
| | | 9,900 | | |
| | Opening price : 11,000 | 9,800 | | |
| | High price : 10,500 | 9,700 | | |
| | Low price : 10,000 Closing price : 10,000 | 9,600 | | |
| | | 9,500 | | |
| Sales balance | 79,982 | | 250,624 | |

Fig. 11

Fig. 12a

Fig. 12b

Financial investment product : public offering fund according to present invention

[Participants]

[Sign up for fund]

Investment competition

10,000 won

[Asset management company]

Fundraising 100%

[Action]

Investment in company

Real estate investment

Stock investment

Bond investment

Derivative product investment

Real asset investment

[Result]

Refund 100%

Investment return

Differential distribution

Fig. 12c

## INTERNATIONAL SEARCH REPORT

| International application No. |
|---|
| **PCT/KR2022/003138** |

| **A.** | **CLASSIFICATION OF SUBJECT MATTER** |
|---|---|

**G06Q 40/06**(2012.01)i; **A63F 13/335**(2014.01)i; **A63F 13/792**(2014.01)i

According to International Patent Classification (IPC) or to both national classification and IPC

| **B.** | **FIELDS SEARCHED** |
|---|---|

Minimum documentation searched (classification system followed by classification symbols)

G06Q 40/06(2012.01); G06Q 30/02(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 게임대회(game competitions), 펀드(fund), 배당금(dividend), 입상(winning of a prize), 순위(ranking), 투자(investment), 수익(return)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | 부산일보. 〔中央洞〕. [online]. 09 August 1961. non-official translation (Busan Ilbo. 〔Jungang-Dong〕). [Retrieved on 14 May 2022]. Retrieved from <URL: http://www.busan.com/view/busan/view.php?code=19610809000060>.<br>See page 1. | 1-7 |
| A | 데일리안. 농협은행, 비대면 적립식 펀드 가입 이벤트 실시. [online]. 01 July 2018. non-official translation (Dailian. Nonghyup Bank Implemented an Untact Subscription Event about Installment Fund). [Retrieved on 14 May 2022]. Retrieved from <URL: https://news.naver.com/main/read.naver?mode=LSD&mid=sec&sid1=101&oid=119&aid=0002266883>.<br>See pages 1-2. | 1-7 |
| A | KR 10-2014-0048524 A (ONSETONGSIN) 24 April 2014 (2014-04-24)<br>See entire document. | 1-7 |
| A | SBS. 시장 금리 오르자 대출 금리 '꿈틀'. [online]. 05 November 2005. non official-translation (SBS. 'Reacting' the Interest on a Loan after Market Interest Rose). [Retrieved on 14 May 2022]. Retrieved from https://n.news.naver.com/mnews/article/055/0000056925?sid=115.>.<br>See entire document. | 1-7 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 June 2022** | **17 June 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2022/003138** |

**C.      DOCUMENTS CONSIDERED TO BE RELEVANT**

| Category* | Citation of document, with indication, where appropriate, of the relevant passages | Relevant to claim No. |
|---|---|---|
| A | 서울신문. 참가자 늘수록 상금도 늘어난다…신개념 모의투자대회 개최. [online]. 24 May 2016. non -official translation (The Seoulshinmun Daily. The More Participants Join, the More Prize Money Rises.. . The New Concept of Mock Investment Contest Is Held). [Retrieved on 14 May 2022]. Retrieved from < URL: https://www.seoul.co.kr/news/newsView.php?id=20160524500205>.<br>     See entire document. | 1-7 |

Form PCT/ISA/210 (second sheet) (July 2019)

**INTERNATIONAL SEARCH REPORT**
Information on patent family members

International application No.

**PCT/KR2022/003138**

| Patent document cited in search report | Publication date (day/month/year) | Patent family member(s) | Publication date (day/month/year) |
|---|---|---|---|
| KR 10-2014-0048524 A | 24 April 2014 | KR 10-2020-0138099 A | 09 December 2020 |

Form PCT/ISA/210 (patent family annex) (July 2019)